Europäisches Patentamt

European Patent Office

Office européen des brevets

(11) Publication number: **0 514 834 A1**

# EUROPEAN PATENT APPLICATION

(21) Application number: **92108430.7**

(22) Date of filing: **19.05.92**

(51) Int. Cl.5: **C08C 19/44**, C08L 15/00

(30) Priority: **21.05.91 US 703534**

(43) Date of publication of application:
**25.11.92 Bulletin 92/48**

(84) Designated Contracting States:
**BE DE ES FR GB IT**

(71) Applicant: **BRIDGESTONE CORPORATION**
**10-1 Kyobashi 1-Chome, Chuo-Ku**
**Tokyo 104(JP)**

(72) Inventor: **Hergenrother, William L.**
**195 Dorchester Road**
**Akron, Ohio 44313(US)**
Inventor: **Bethea, Tristram W.**
**950 Sandin Drive**
**Akron, Ohio 44333(US)**

(74) Representative: **Kraus, Walter, Dr. et al**
**Patentanwälte Kraus, Weisert & Partner**
**Thomas-Wimmer-Ring 15**
**W-8000 München 22(DE)**

(54) Elastomers and products having reduced hysteresis properties.

(57) A method of preparing an elastomer having reduced hysteresis properties comprises the step of reacting an anionic polymer having at least one functional site, with about one equivalent of a lead compound having the formula $R_3PbX$ to form an adduct, where R is an organo group selected from the group consisting of alkyls having from about 1 to about 20 carbon atoms, cycloalkyls having from about 3 to about 20 carbon atoms, aryls having from about 6 to about 20 carbon atoms and aralkyls having from about 7 to about 20 carbon atoms, and X is a halogen selected from the group consisting of bromine, chlorine and iodine. Articles such as tires, produced with low hysteresis elastomeric polymers have lower rolling resistance.

EP 0 514 834 A1

## TECHNICAL FIELD

The subject invention relates to anionic polymerization of diene polymer and copolymer elastomers. More specifically, the present invention relates to polymerization including endcapping of the polymer with a lead containing compound.

Diene polymers and copolymers, prepared according to the present invention, have reduced hysteresis characteristics after endcapping of the elastomer. Articles such as tires, power belts and the like which are prepared from these polymers exhibit increased rebound, decreased rolling resistance and less heat build-up during mechanical stress operations.

## BACKGROUND ART

In the art, it is desirable to produce elastomeric compounds exhibiting reduced hysteresis. Such elastomers, when compounded to form articles such as tires, power belts and the like, will show an increase in rebound, a decrease in rolling resistance and will have less heat build-up when mechanical stresses are applied.

The main source of hysteretic power loss has been established to be due to the section of the polymer chain from the last cross link of the vulcanizate to the end of the polymer chain. This free end cannot be involved in an efficient elastically recoverable process, and as a result, any energy transmitted to this section of the cured sample is lost as heat. It is known in the art that this type of mechanism can be reduced by preparing higher molecular weight polymers which will have fewer end groups. However, this procedure is not useful because processability of the rubber with compounding ingredients and during shaping operations decreases rapidly with increasing molecular weight.

Another method of reducing hysteresis has been to react a lithium end-capped elastomer with a tin chloride compound to give a polymer terminated with a tin compound. Tin has an affinity for carbon-black, which affinity reduces hysteresis by removing the effect of a free end.

Other additives have been used to react with the carbon-lithium bond to reduce hysteresis characteristics. These have included heavy metal compounds and other organic compounds containing polar groups such as amines, amides, esters, ketones and various combinations thereof.

The present invention provides novel elastomers end-capped with a lead containing compound. The lead containing group of the endcapped elastomer have greater reactivity with the carbon black at lower temperatures than the tin chloride end-capped polymer.

## DISCLOSURE OF THE INVENTION

It is therefore, an object of the present invention to provide elastomers having reduced hysteresis characteristics.

It is a further object of the present invention to provide a method of preparing elastomers having reduced hysteresis characteristics.

It is another object of the present invention to provide a vulcanizable elastomeric compound having reduced hysteresis characteristics.

It is still a further object of the present invention to provide an elastomer endcapped with a lead containing compound.

Still another object of the present invention is to provide an improved tire having decreased rolling resistance.

These and other objects together with the advantages thereof over the existing art, which shall become apparent from the specification which follows, are accomplished by the invention as hereinafter described and claimed.

In general, a method of preparing an elastomer having reduced hysteresis properties comprises the step of reacting an anionic polymer having at least one functional site, with about one equivalent of a lead compound having the formula $R_3PbX$ to form an adduct. R is an organo group selected from the group consisting of alkyls having from about 1 to about 20 carbon atoms, cycloalkyls having from about 3 to about 20 carbon atoms, aryls having from about 6 to about 20 carbon atoms and aralkyls having from about 7 to about 20 carbon atoms, and X is a halogen selected from the group consisting of bromine, chlorine and iodine.

An elastomer according to the invention and having decreased hysteresis properties comprises the reaction product of an anionic polymer having at least one functional site and a lead compound having the formula $R_3PbX$. R is an organo group selected from the group consisting of alkyls having from about 1 to about 20 carbon atoms, cycloalkyls having from about 3 to about 20 carbon atoms, aryls having from about 6 to about 20 carbon atoms and aralkyls having from about 7 to about 20 carbon atoms, and X is a halogen selected from the group consisting of bromine, chlorine and iodine.

A vulcanizable elastomeric compound having reduced hysteresis characteristics upon vulcanization comprises the reaction product of an anionic polymer having at least one functional site and a lead compound having the formula $R_3PbX$. R is an organo group selected from the group consisting of alkyls having from about 1 to about 20 carbon atoms, cycloalkyls having from about 3 to about 20 carbon atoms, aryls having from about 6 to about 20 carbon atoms and aralkyls having from about 7 to about 20 carbon atoms, and X is a halogen selected from the group consisting of bromine, chlorine and iodine. The compound also comprises from about 20 to about 100 parts by weight of carbon black, per 100 parts of the reaction product.

An improved tire having decreased rolling resistance results from a treadstock containing a vulcanizable elastomeric compound which comprises the reaction product of an anionic polymer having at least one functional site and a lead compound having the formula $R_3PbX$. R is an organo group selected from the group consisting of alkyls having from about 1 to about 20 carbon atoms, cycloalkyls having from about 3 to about 20 carbon atoms, aryls having from about 6 to about 20 carbon atoms and aralkyls having from about 7 to about 20 carbon atoms, and X is a halogen selected from the group consisting of bromine, chlorine and iodine. The compound also comprises from about 20 to about 100 parts by weight of carbon black, per 100 parts of the reaction product.

## PREFERRED EMBODIMENT FOR CARRYING OUT THE INVENTION

As will become apparent from the description which follows, the present invention provides novel elastomer polymers endcapped with a lead containing compound. It has been discovered herein that vulcanizable elastomeric compounds and articles thereof based upon such endcapped elastomer polymers exhibit useful properties, particularly the property of reduced hysteresis. When compounded to make products such as tires, power belts and the like, these vulcanizable elastomeric compounds exhibit increased rebound, decreased rolling resistance and less heat build-up during periods of applied mechanical stress.

The elastomer polymers according to the present invention are any anionically-polymerized elastomer, *e.g.*, polybutadiene, polyisoprene and the like, and copolymers thereof with monovinyl aromatics such as styrene, alpha methyl styrene and the like, or trienes such as myrcene. Thus, the elastomers include diene homopolymers and copolymers thereof with monovinyl aromatic polymers. Suitable monomers for forming elastomers of the present invention include conjugated diolefins having from about 4 to about 12 carbon atoms and monovinyl aromatic monomers having 8 to 18 carbon atoms and trienes. Examples of conjugated diene monomers and the like useful in the present invention include 1,3-butadiene, isoprene, 1,3-pentadiene, 2,3-dimethyl-1,3-butadiene and 1,3-hexadiene, and aromatic vinyl monomers include styrene, alpha-methylstyrene, p-methylstyrene, vinyltoluene and vinylnaphtalene. The conjugated diene monomer and aromatic vinyl monomer are normally used at the weight ratios of 95-50:5-50, preferably 95-65:5-35.

The elastomer polymer results from an anionic polymerization employing any suitable anionic polymerization initiator and resulting in an elastomer having at least one functional site. For example, one preferred initiator is butyl lithium which results in an elastomer having a carbon-lithium bond. Other examples of useful polymerization initiators include s-butyl lithium, t-butyl lithium, allyl lithium, methyl lithium, dodecyl lithium, tributyl tin lithium, and the like.

Polymerization is usually conducted in a conventional solvent for anionic polymerizations such as hexane, cyclohexane, benzene and the like. Other techniques for polymerization, such as semi-batch and continuous polymerization may be employed. In order to promote randomization in copolymerization and to control vinyl content, a polar coordinator may be added to the polymerization ingredients. The amount depends on the amount of vinyl desired, the level of styrene employed and the temperature of the polymerization, as well as the nature of the specific polar coordinator (modifier) employed.

Compounds useful as polar coordinators include those having an oxygen or nitrogen hetero-atom and a non-bonded pair of electrons. Examples include dialkyl ethers of mono and oligo alkylene glycols; "crown" ethers; tertiary amines such as tetramethylethylene diamine (TMEDA), N-N'-dimethylpiperazine, and tributylamine; tetrahydrofuran (THF), linear and cyclic oligomeric oxolanyl alkanes such as 2-2'-di-(tetrahydrofuryl) propane, di-piperidyl ethane, hexamethylphosphoramide, diazabicyclooctane, dimethyl ether, diethyl ether, and the like.

A batch polymerization is begun by charging a blend of monomer(s) and solvent to a suitable reaction vessel, followed by the addition of the polar coordinator (if employed) and the initiator compound previously described. The reactants are heated to a temperature of from about 0° C to about 200° C, and the polymerization is allowed to proceed for from about 0.1 to about 24 hours.

The polymer is then terminated or "endcapped" by the addition of a lead compound having the general formula

$$R_3PbX$$

where X is a halogen such as bromide, chloride or iodide, and the organic moiety R is selected from the group consisting of alkyls having from about 1 to about 20 carbon atoms, cycloalkyls having from about 3 to about 20 carbon atoms, aryls having from about 6 to about 20 carbon atoms and aralkyls having from about 7 to about 20 carbon atoms. Typical alkyls include n-butyl, s-butyl, methyl, ethyl, isopropyl and the like. The cycloalkyls include cyclohexyl, menthyl and the like. The aryl and aralkyl groups include phenyl, benzyl and the like. Useful lead compounds include bromides, chlorides and iodides of triaklyl lead, triethyl lead, trimethyl lead, tribenzyl lead, tritolyl lead, and tricyclohexyl lead, and the like. One preferred lead compound is triphenyl lead chloride. It is preferred to react about one equivalent of the lead compound with the anionic polymer.

The end-capped polymer may be separated from the solvent by conventional techniques. These include steam or alcohol coagulation, thermal desolventization, or any other suitable method. Additionally, solvent may be removed from the resulting polymer by drum drying, extruder drying, vacuum drying or the like.

It is believed that the lead end-capped polymers according to the present invention react effectively with carbon black and hence, provide a polymer having reduced hysteresis characteristics.

The polymers of the present invention can be used alone or in combination with other elastomers to prepare a tire treadstock compound. For example, they can be blended with any conventionally employed treadstock rubber which includes natural rubber, synthetic rubber and blends thereof. Such rubbers are well known to those skilled in the art and include synthetic polyisoprene rubber, styrene/butadiene rubber (SBR), polybutadiene, butyl rubber, Neoprene, ethylene/propylene rubber, ethylene/propylene/diene rubber (EPDM), acrylonitrile/butadiene rubber (NBR), silicone rubber, the fluoroelastomers, ethylene acrylic rubber, ethylene vinyl acetate copolymer (EVA), epichlorohydrin rubbers, chlorinated polyethylene rubbers, chlorosulfonated polyethylene rubbers, hydrogenated nitrile-rubber, tetrafluoroethylene/propylene rubber and the like. When the polymers of the present invention are blended with conventional rubbers, the amounts can vary widely such as between 10 and 99 percent by weight, depending upon the amount of hysteresis reduction desired.

The polymers can be compounded with carbon black in amounts ranging from about 20 to about 100 parts by weight, per 100 parts of rubber (phr), with about 40 to about 70 phr being preferred. The carbon blacks may include any of the commonly available, commercially-produced carbon blacks but those having a surface area (EMSA) of at least 20 m$^2$/gram and more preferably at least 35 m$^2$/gram up to 200 m$^2$/gram or higher are preferred. Surface area values used in this application are those determined by ASTM D-1765 using the cetyltrimethylammonium bromide (CTAB) technique. Among the useful carbon blacks are furnace black, channel blacks and lamp blacks. Further discussions of such carbon blacks can be found in the literature. See, for example The Vanderbilt Rubber Handbook, pp 408-424, RT Vanderbilt Co., Norwalk, CT 06855 (1979). More specifically, examples of the carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be utilized include acetylene blacks. Mixtures of two or more of the above blacks can be used in preparing the products of the present invention. Typical values for surface areas of usable carbon blacks are summarized in the following Table I.

TABLE I

| Carbon Blacks | |
|---|---|
| ASTM Designation (D-1765-82a) | Surface Area ($m^2$/g) (D-3765) |
| N-110 | 126 |
| N-220 | 111 |
| N-339 | 95 |
| N-330 | 83 |
| N-550 | 42 |
| N-660 | 35 |

The carbon blacks utilized in the preparation of the rubber compounds of the invention may be in pelletized form or an unpelletized flocculent mass. Preferably, for more uniform mixing, unpelletized carbon black is preferred. The reinforced rubber compounds can be cured in a conventional manner with known vulcanizing agents in amounts of from about 0.5 to about 4 phr. For example, sulfur or peroxide-based curing systems may be employed. For a general disclosure of suitable vulcanizing agents one can refer to Kirk-Othmer, Encyclopedia of Chemical Technology, 3rd ed., Wiley Interscience, N.Y. 1982, Vol. 20, pp.365-468, particularly "Vulcanization Agents and Auxiliary Materials"pp.390-402. Vulcanizing agents may be used alone or in combination.

Vulcanizable elastomeric compositions of the invention can be prepared by compounding or mixing the polymers thereof with carbon black and other conventional rubber additives such as fillers, plasticizers, antioxidants, curing agents and the like, using standard rubber mixing equipment and procedures and conventional amounts of such additives. Such elastomeric compounds when vulcanized using conventional rubber vulcanization conditions have reduced hysteresis properties and are particularly adapted for use as tread rubbers for tires having reduced rolling resistance.

**General Experimental**

In order to demonstrate the preparation and properties of elastomers prepared according to the present invention, a styrene/butadiene rubber (SBR) was prepared employing a suitable polymerization initiator, as will be more fully discussed hereinbelow. A control sample of the prepared polymer was isolated, and the remaining polymer was end-capped with a lead compound according to the invention. As noted above, various techniques known in the art for carrying out polymerizations may be employed without departing from the scope of the present invention.

Both the control and the invention polymer samples of each example were then tested for tensile strength (psi), percent elongation, Mooney viscosity at 100° C, tan delta (at both 24° C and 65° C), and the change in tan delta of the invention polymer as compared to the control polymer was calculated. Tan delta was determined on a Rheometrics stress rheometer at 0.5 Hz. Each compounded polymer was also tested for rebound by employing the industry standard ball drop test.

**Example No. 1**

In a suitable 5 gallon reactor vessel, 2295 grams of a 33 percent styrene in hexane blend and 7983 grams of a 24.5 percent butadiene in hexane blend were added. There was also added 204.2 millimoles (16.6 cubic centimeters or "cc") of dry, pure 12.3 M THF and 25.2 millimoles (16.8cc) of 1.5 M butyl lithium (at 49° C) as a polymerization initiator. The temperature in the reactor vessel was maintained at 49° C for 3 hours. Approximately 5350 grams of the polymer cement was removed to be used as a control polymer in the ensuing tests.

To the remaining polymer in the reaction vessel was added 10.8 millimoles (5.11 grams) of triphenyl lead chloride dissolved in 50 cc of THF. After stirring for one hour, the polymer was isolated by adding the cement to isopropyl alcohol containing 2,6-di-tert-butyl-para-cresol (DBPC) and drum drying. Analysis of this polymer showed 29.1 percent styrene content, 27.1 percent vinyl polybutadiene, 0.13 percent lead and an average molecular weight of 132,000 grams/mole. The control polymer was found to have an average molecular weight of 124,000 g/mole.

The control polymer (Control Polymer 1) and the invention polymer (Invention Polymer 1) were each compounded with a conventional treadstock formulation The treadstock formulation included 100 parts of the rubber to be tested, 50 parts of ASTM N-339 carbon black per 100 parts rubber (phr), 3 phr zinc oxide, 1.8 phr sulfur, 2 phr stearic acid, 1 phr Santoflex 13 and 1 phr Santocure NS. This compound was then cured for 30 minutes at 150 C. Physical properties of each compound are reported in Table II hereinbelow.

TABLE II

| Hysteresis Properties of Rubber Compounds of Example No. 1 | | | |
|---|---|---|---|
| | | Control Polymer 1 | Invention Polymer 1 |
| tensile strength | 25° C | 3490 | 3610 |
| | 100° C | 1830 | 1760 |
| percent | 25° C | 397 | 337 |
| elongation[a] | 100° C | 326 | 280 |
| ML$_4$ 100° C[b] | | 89.3 | 103.8 |
| rebound | 23° C | 42.8 | 50.6 |
| | 65° C | 59.2 | 64.6 |
| tan δ at | 24° C | 0.1877 | 0.1652 |
| 7% elongation | 65° C | 0.1632 | 0.1188 |
| Δ tan δ[c] | 24° C | -- | -12.0 |
| | 65° C | -- | -27.2 |

a) percent elongation at break
b) Mooney viscosity
c) percent change from Control Polymer 1

With respect to the data reported in Table II, it is noted that Invention Polymer 1 showed a percent rebound of 50.6 and 64.6 at 21° C and 49° C respectively, while Control Polymer 1 showed a percent rebound of 42.8 and 59.2 respectively. The improvement in rebound would suggest a corresponding decrease in tan delta, which was confirmed by the tan delta data.

At both 24° C and 65° C tests, tan delta for Invention Polymer 1 was found to be superior to that of Control Polymer 1. The lower the tan delta number, the lower are the hysteresis properties of the sample.

These data show that the polymer prepared according to the invention by endcapping the SBR polymer with a lead containing end group, provided the result of a reduction in hysteresis in the elastomeric compound. Control Polymer 1 was found to have a tan delta of 0.1187 and 0.1632 at 24° C and 65° C respectively, while Invention Polymer 1 was found to have a tan delta of 0.1652 and 0.1188 respectively.

It should now be clear from the foregoing examples and specification disclosure, that elastomer compounds according to the present invention are useful for providing improvements in hysteresis characteristics. These polymers exhibit improved hysteresis properties when compared to similar polymers prepared by similar means but lacking the lead-containing end groups. As a result, the vulcanizable compounds containing these polymers exhibit improved hysteresis properties which provide tread compounds improved rolling resistance in tires.

It is to be understood that the invention is not limited to the specific initiators, lead compounds, monomers, polar coordinators or solvents disclosed herein, except as otherwise stated in the specification. Similarly, the example has been provided merely to demonstrate practice of the subject invention and do not constitute limitations of the invention. Those skilled in the art may readily select other monomers and process conditions, according to the disclosure made hereinabove.

Thus, it is believed that any of the variables disclosed herein can readily be determined and controlled without departing from the scope of the invention herein disclosed and described. Moreover, the scope of the invention shall include all modifications and variations that fall within the scope of the attached claims.

**Claims**

1. A method of preparing an elastomer having reduced hysteresis properties comprising the step of:

reacting an anionic polymer having at least one functional site, with about one equivalent of a lead compound having the formula R$_3$PbX to form an adduct, where R is an organo group selected from the group consisting of alkyls having from about 1 to about 20 carbon atoms, cycloalkyls having from about 3 to about 20 carbon atoms, aryls having from about 6 to about 20 carbon atoms and aralkyls having from about 7 to about 20 carbon atoms, and X is a halogen selected from the group consisting of bromine, chlorine and iodine.

2. A method of preparing an elastomeric compound as set forth in claim 1, comprising the further step of compounding from about 95 to about 50 parts by weight of said adduct with from about 5 to about 50 parts by weight of a conventional treadstock formulation comprising a rubber component and from about 20 to about 100 parts by weight of carbon black per hundred parts of said rubber component.

3. A method of preparing an elastomeric compound as set forth in claim 2, wherein said rubber component of said treadstock formulation is selected from the group consisting of natural rubber, synthetic rubber and blends thereof.

4. A method of preparing an elastomeric compound as set forth in claim 1, further comprising the initial step of preparing an anionic polymer by polymerizing a monomer solution in the presence of a suitable polymerization initiator.

5. A method of preparing an elastomeric compound as set forth in claim 4, wherein said polymerization initiator is selected from the group consisting of butyl lithium, s-butyl lithium, t-butyl lithium, tributyl tin lithium, allyl lithium, methyl lithium and dodecyl lithium.

6. A method of preparing an elastomeric compound as set forth in claim 5, wherein said anionic polymer is a living polymer having at least one carbon-lithium bond.

7. A method of preparing an elastomeric compound as set forth in claim 4, wherein said monomer solution comprises a monomer component selected from the group consisting of conjugated dienes having from about 4 to about 12 carbon atoms, monovinyl aromatic monomers having from about 8 to about 18 carbon atoms, trienes and mixtures thereof.

8. A method of preparing an elastomeric compound as set forth in claim 7, wherein said monomer solution further comprises a solvent selected from the group consisting of hexane, cyclohexane and benzene.

9. A method of preparing an elastomeric compound as set forth in claim 1, wherein said anionic polymer is selected from the group consisting of diene homopolymers and copolymers thereof with monovinyl aromatic polymers.

10. A method of preparing an elastomeric compound as set forth in claim 1, wherein said organo groups R are phenyl groups.

11. An elastomer having decreased hysteresis properties comprising:
    the reaction product of an anionic polymer having at least one functional site and a lead compound having the formula $R_3PbX$, where R is an organo group selected from the group consisting of alkyls having from about 1 to about 20 carbon atoms, cycloalkyls having from about 3 to about 20 carbon atoms, aryls having from about 6 to about 20 carbon atoms and aralkyls having from about 7 to about 20 carbon atoms, and X is a halogen selected from the group consisting of bromine, chlorine and iodine.

12. A vulcanizable elastomer as set forth in claim 11, wherein said organo groups R are phenyl groups.

13. A vulcanizable elastomer as set forth in claim 11, wherein said anionic polymer is selected from the group consisting of diene homopolymers and copolymers thereof with monovinyl aromatic polymers.

14. A vulcanizable elastomer as set forth in claim 13, wherein said anionic polymer is a living polymer having at least one carbon-lithium bond.

15. A vulcanizable elastomeric compound having reduced hysteresis characteristics upon vulcanization comprising:
    the reaction product of an anionic polymer having at least one functional site and a lead compound having the formula $R_3PbX$, where R is an organo group selected from the group consisting of alkyls

7

having from about 1 to about 20 carbon atoms, cycloalkyls having from about 3 to about 20 carbon atoms, aryls having from about 6 to about 20 carbon atoms and aralkyls having from about 7 to about 20 carbon atoms, and X is a halogen selected from the group consisting of bromide, chloride and iodide; and,

from about 20 to about 100 parts by weight of carbon black, per 100 parts of said reaction product.

16. An improved tire having decreased rolling resistance resulting from a treadstock containing a vulcanizable elastomeric compound comprising:

the reaction product of an anionic polymer having at least one functional site and a lead compound having the formula $R_3PbX$, where R is an organo group selected from the group consisting of alkyls having from about 1 to about 20 carbon atoms, cycloalkyls having from about 3 to about 20 carbon atoms, aryls having from about 6 to about 20 carbon atoms and aralkyls having from about 7 to about 20 carbon atoms, and X is a halogen selected from the group consisting of bromide, chloride and iodide; and,

from about 20 to about 100 parts by weight of carbon black, per 100 parts of said reaction product.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 026 865 (C.A. URANECK ET AL) <br> * abstract * <br> * column 3 - column 4; example I * <br> * column 6, line 6 - line 65 * <br> * column 7, line 8 - line 43 * <br> --- | 1,4-16 | C08C19/44 <br> C08L15/00 |
| A | FR-A-2 490 651 (JAPAN SYNTHETIC RUBBER CO. LTD.) <br> * claim 10 * <br> * page 6, line 27 - line 37 * <br> --- | | |
| A | FR-A-2 603 592 (BRIDGESTONE CORP.) <br> * abstract * <br> * page 1, line 3 - line 5 * <br> * page 5, line 9 - line 10 * <br> ----- | | |

| | |
|---|---|
| | TECHNICAL FIELDS SEARCHED (Int. Cl.5) <br><br> C08C |

The present search report has been drawn up for all claims

| Place of search | Date of completion of the search | Examiner |
|---|---|---|
| THE HAGUE | 13 AUGUST 1992 | METTLER R.M. |

EPO FORM 1503 03.82 (P0401)